# EUROPÄISCHE PATENTSCHRIFT

(11) **EP 1 826 401 B1**
(45) Veröffentlichungstag und Bekanntmachung des Hinweises auf die Patenterteilung: **22.04.2015**
(21) Anmeldenummer: 07003117.4
(22) Anmeldetag: 14.02.2007
(51) Int. Cl.: B66C 1/62

(54) **Verfahren zur Montage und Demontage eines Rotorblattes einer Windenergieanlage sowie Montage-/Demontagevorrichtung**
Method of assembling or disassembling a wind turbine rotor blade and assembly therefor
Procédé d'assemblage et désassemblage d'une pale de rotor d'éolienne et un tel dispositif

(30) Priorität: 23.02.2006 DE 102006008428
(43) Veröffentlichungstag der Anmeldung: 29.08.2007
(73) Patentinhaber: Senvion SE, 22297 Hamburg (DE)
(72) Erfinder: Kroll, Gerd, 24796 Bovenau (DE); Petsche, Marc, 24809 Nübbel (DE); Trede, Alf, 25885 Immenstedt (DE)
(74) Vertreter: Groth, Wieland

(56) Entgegenhaltungen:
- WO-A2-2006/053554
- DE-U- 29 603 278
- DE-U-202004 016 460
- GB-A- 2 029 911
- JP-A- 3 051 182
- JP-A- 2005 002 875
- JP-A- 2005 201 128

## Beschreibung

Die Erfindung betrifft ein Verfahren zur Montage und/oder Demontage eines Rotorblattes an/von einer mit einer Gondel einer Windenergieanlage drehbar verbundenen Rotornabe und eine Montageanordnung für ein Rotorblatt an einer mit einer Gondel einer Windenergieanlage drehbar verbundenen Rotornabe, gemäß dem Oberbegriff des Anspruchs 6.

Rotorblätter von Windenergieanlagen müssen nach dem Aufbau des Turms und der Gondel an der hohen Rotornabe montiert werden. Dazu ist es notwendig, das Rotorblatt zunächst an einer Hebevorrichtung, beispielsweise einem Kran, zu befestigen und danach zur Rotornabe hoch zu heben.

Darüber hinaus stellt sich die Aufgabe, Rotorblätter inspizieren zu müssen. Dafür ist eine Demontagevorrichtung notwendig, mit der das an der Rotornabe montierte Rotorblatt herabgelassen werden kann.

Die Montage bzw. Demontage der zum einen schweren und zum anderen trotzdem sehr empfindlichen Rotorblätter sind mit nicht unerheblichen Schwierigkeiten verbunden. Die Außenhaut der Rotorblätter darf bei der Montage oder Demontage nicht beschädigt werden.

Aus der WO 03/100249 A1 ist eine Vorrichtung und ein Verfahren zur Montage eines Rotorblattes bekannt, bei dem das Rotorblatt mittels eines klammerartigen Griffes an einem Kran gehalten wird und durch Absenken bzw. Anheben des Griffes von der Rotornabe weg oder zu ihr hin bewegbar ist. Nachteilig an dem dort offenbarten Verfahren und der Vorrichtung ist, dass der Griff mit so großen Kräften auf die Rotorblattaußenwandung wirken muss, dass eine reibschlüssige Verbindung erzeugt wird, die auch unter den Gewichtskräften des Rotorblatts belastungsstabil bleibt. Die Stärke dieser Kräfte kann zu Beschädigungen der Rotorblattaußenhaut führen.

Aus der WO 2004/070203 A2 ist ein Rotorblatt bekannt, das Durchgangslöcher zur Befestigung von Halteseilen aufweist. Die Durchgangslöcher haben den Nachteil, dass sie zum einen die Stabilität des Rotorblattes beeinträchtigen und - insbesondere im Flügelbereich - zum anderen aerodynamisch ungünstig wirken.

Aus der JP 2005-2875 (A) ist ein Montageverfahren für das Rotorblatt einer Windenergieanlage bekannt, bei dem das Rotorblatt mittels einer an der Rotorblattspitze angeordneten köcherartigen Befestigungseinrichtung vertikal verfahren wird. Zum Anheben des Rotorblattes ist eine am Turm angeordnete kranartige Struktur vorgesehen. Diese Vorrichtung ist relativ aufwendig in der Eigenmontage.

Aus der JP 2005-201128 (A) ist ein Montageverfahren für eine komplette Windenergieanlage bekannt, bei dem in einem der letzten Schritte der Rotor samt Rotorblättern mittels einer verfahrbaren Hebebühne am Turm entlang angehoben werden kann und so montierbar ist. Auch diese Montageeinrichtung ist ausgesprochen aufwendig zu montieren.

Es ist Aufgabe der Erfindung, ein Verfahren zur Montage bzw. Demontage eines Rotorblatts zur Verfügung zu stellen, das die oben genannten Nachteile vermeidet, und es ist Aufgabe der Erfindung, eine die oben genannten Nachteile vermeidende Montage-/Demontageanordnung mit einem Rotorblatt zur Verfügung zu stellen.

Die Aufgabe wird in ihrem ersten Aspekt durch ein Verfahren mit den Merkmalen des Anspruchs 1 erfüllt. Das Verfahren betrifft zum einen den Montagevorgang des zunächst auf dem Boden oder einer Transporteinrichtung liegenden Rotorblattes mit dem wenigstens einen nach außen abstehenden Vorsprung. Das Rotorblatt wird direkt unter der Rotornabe transportiert und die Manschette wird unmittelbar neben dem wenigstens einen Vorsprung positioniert. Vorzugsweise danach wird das Hebemittel an der Manschette angebracht, um das Rotorblatt danach zu einer in 6-Uhr Stellung gedrehten Anschlussstelle der Rotornabe anzuheben und es dort mit ihr zu verbinden. Die Rotorblattspitze wird günstigenfalls zu Beginn des Montagevorgangs auf einem kleinen Wagen nachgeführt oder durch ein weiteres Hebemittel vom Boden angehoben, um sie vor Beschädigungen durch Schleifen am Boden zu schützen.

Das erfindungsgemäße Verfahren betrifft auch einen Demontagevorgang eines Rotorblattes mit nach außen abstehendem wenigstens einen Vorsprung von der Rotornabe. Zunächst wird das wenigstens eine Hebemittel dabei an der Manschette angebracht und die Manschette dann günstigstenfalls am in 12-Uhr Stellung gedrehten Rotorblatt neben dem wenigstens einen Vorsprung positioniert, um das Rotorblatt dann zur Demontage mit Manschette und Hebemittel zunächst in 6-Uhr Stellung zu drehen. Darauf folgend wird das Rotorblatt von der Rotornabe gelöst und dann abgesenkt.

Sowohl beim Montage- als auch beim Demontageverfahren wirkt erfindungsgemäß mindestens ein Teil der während des Anhebens bzw. Absenkens auf das Rotorblatt ausgeübten Gewichtskraft auf den wenigstens einen Vorsprung. Damit kann eine reibschlüssige Verbindung zwischen Innenwandung der Manschette und Außenwandung des Rotorblatts entlastet werden und das Rotorblatt wird geschont.

Zur Erzielung einer günstigen Aerodynamik wird die Manschette im letzten Verfahrensschritt samt Hebemittel nach der Montage/Demontage wieder von dem Rotorblatt gelöst und entfernt.

Vorzugsweise wird die Manschette wenigstens zum überwiegenden Teil des Umfangs quer zur Längsrichtung um das Rotorblatt gelegt. Vorteilhafterweise ist der Vorsprung im Bereich der Rotorblattwurzel, die Rotorblattwurzel vollständig umlaufend, ausgebildet. Der Vorsprung kann integral mit der Rotorblattwurzel verbunden sein, oder auf ihr auch Zug- und Druckbelastungen in einer Längsrichtung des Rotorblattes standhaltend, d.h. belastungsstabil verklebt, verschraubt o. Ä. sein. Der wenigstens eine Vorsprung ist vorteilhafterweise besonders belastungsstabil.

In einer anderen Ausführungsform der Erfindung wird der wenigstens eine Vorsprung lösbar mit der Rotorblattaußenwandung verbunden. Der wenigstens eine Vorsprung wird vor dem Anbringen der Manschette an dem Rotorblatt kraft- und/oder formschlüssig verspannt. Der wenigstens eine Vorsprung kann als die Rotorblattwurzel umlaufende Manschette der Außenwandung der Rotorblattwurzel exakt angeformt werden und mit einem Spannmechanismus versehen werden. Nach dem Abnahmen des wenigstens einen Vorsprungs, ist die Rotorblattaußenwandung besonders gut aerodynamisch ausgeformt.

Flügelseitig direkt neben dem wenigstens einen Vorsprung wird zur Durchführung des erfindungsgemäßen Verfahrens eine Manschette positioniert. Eine Innenwandung der Manschette ist der äußeren Rotorblattwandung angeformt. Nach dem Positionieren liegt die Innenwandung der Manschette nur leicht auf der äußeren Rotorblattwandung auf. Die Verbindung beider Flächen ist dabei vorwiegend form- und nur gering reibschlüssig. Wenn der wenigstens eine Vorsprung an der Rotorblattwurzel angeordnet ist, wird die Manschette ebenfalls um die Rotorblattwurzel, vorzugsweise flügelseitig des Vorsprungs zwischen Schwerpunkt des Rotorblattes und Vorsprung positioniert.

In einer weiteren bevorzugten Ausführungsform des erfindungsgemäßen Verfahrens werden wenigstens zwei in Längsrichtung des Rotorblattes voneinander beabstandete Vorsprünge vorgesehen. Die Manschette wird zwischen den voneinander beabstandeten wenigstens zwei Vorsprüngen positioniert. Vorteilhafterweise kann die Manschette somit weder in noch entgegen der Längsrichtung des Rotorblattes verrutschen.

Hinsichtlich der Montage-/Demontageanordnung für ein Rotorblatt an einer mit einer Gondel einer Windenergieanlage drehbar verbundenen Rotornabe wird die Aufgabe durch ein Rotorblatt mit wenigstens einem nach außen abstehenden Vorsprung und mit einer abnehmbaren Manschette, die neben dem wenigstens einen Vorsprung positionierbar ist und durch wenigstens ein Hebemittel gelöst, das an der Manschette anbringbar ist. Die Montage-/Demontageanordnung eignet sich insbesondere zur Durchführung jedes der oben beschriebenen Verfahren.

Der wenigstens eine Vorsprung weist wenigstens eine Anlage an seiner flügelseitigen Kante auf. Die Manschette umfasst die Rotorblattwurzel günstigenfalls vollständig, und sie weist eine korrespondierende Anlage entlang ihrer der Rotorblattöffnung zugewandten Kante auf. Anlage und korrespondierende Anlage berühren einander und bilden vorzugsweise eine formschlüssige Verbindung aus.

Über die Verbindung zwischen Anlage und korrespondierender Anlage wirkt mindestens ein Teil der während des Anhebens/Absenkens des Rotorblattes ausgeübten Gewichtskraft über die Manschette auf den wenigstens einen Vorsprung und auf das Rotorblatt. Die reibschlüssige Verbindung zwischen Manschette und Rotorblattaußenwandung wird somit entlastet. Die erfindungsgemäße Manschette braucht gegenüber herkömmlichen Manschetten oder Greifwerkzeugen nur mit einer deutlich geringeren Kraft gegen die Rotorblattaußenwandung gedrückt zu werden, weil nur noch ein Teil der gesamten Gewichtskraft über die reibschlüssige Verbindung zwischen Manschette und Rotorblattaußenwandung auf das Rotorblatt übertragen zu werden braucht. Damit ist die Rotorblattaußenwandung einer geringeren Gefahr von Beschädigungen ausgesetzt.

Der wenigstens eine Vorsprung kann vielfältig ausgebildet sein. Günstigenfalls ist er ringförmig, die Rotorblattwurzel einmal vollständig umlaufend ausgebildet. Die Anlage umläuft die Rotorblattwurzel vorzugsweise in einer Ebene quer zur Längsrichtung des Rotorblattes. Die flügelseitige Kante bildet so eine besonders lange Anlage für die Manschette aus, wodurch die Gewichtskräfte vorteilhaft lang verteilt werden.

Bei die Rotorblattwurzel vollständig umfassender Manschette umläuft die korrespondierende Anlage die Rotorblattwurzel ebenfalls einmal vollständig, und sie ist in derselben Ebene wie die Anlage vorgesehen. Die korrespondierende Anlage wirkt mit der Anlage zusammen, indem sich beide entlang ihres gesamten Umfangs berühren.

Es ist auch denkbar, mehrere einzelne sich entlang des Umfangs abschnittsweise über die Rotorblattaußenwandung erhebende Vorsprünge vorzusehen, die jeweils einzelne Anlagekanten oder sogar nur -punkte für die Manschette ausbilden. Die flügelseitigen Anlagekanten/-punkte mehrerer Vorsprünge können auch in einer Ebene quer zur Längsrichtung liegen und eine Vorsprungsreihe ausbilden, die mit einer Kantenstruktur einer korrespondierend ausgeformten, rotorblattöffnungsseitigen Anlage der Manschette verzahnt ist. Die Verzahnung verhindert ein Verrutschen der Manschette entlang des Umfanges.

Der wenigstens eine Vorsprung ist vorzugsweise integral mit der äußeren Rotorblattwandung ausgebildet oder mit ihr verklebt oder verschraubt und damit besonders belastungsstabil. Insbesondere in der integralen Ausführungsform kann der mindestens eine Vorsprung durch die aerodynamisch bedingte Verbreiterung des Rotorblattes im Flügelbereich entgegen der Rotorblattlängsrichtung ausgebildet sein. Hierbei wird in kostengünstiger Weise die ohnehin vorhandene Verbreiterung des Rotorblattes als Vorsprung ausgenutzt. Alternativ kann er nach der Montage auch entfernt werden, um somit eine besonders gute Aerodynamik zu erhalten.

Der Vorsprung kann aber auch vom Rotorblatt lösbar sein, um damit nach der Montage eine aerodynamisch besonders günstige Rotorblattaußenwandung zur Verfügung zu stellen.

Der Vorsprung hält in allen Ausführungsformen Zug- und Druckbelastungen in Längsrichtung des Rotorblattes bis zu einer Größenordnung stand, die wenigstens der Gewichtskraft des gesamten Rotorblattes entspricht.

Der Vorsprung ist darüber hinaus aber auch eine Sicherheitseinrichtung, die ein Abrutschen der Manschette von der Rotorblattwurzel über die Rotorblattöffnung sicher verhindert.

In einer weiteren bevorzugten Ausführungsform der Erfindung, ist der Vorsprung als ein die Rotorblattwurzel konzentrisch umlaufender Hebering mit einem rotorblattöffnungsseitig konzentrisch angeordneten Regenabweiser ausgebildet. Der Hebering bildet den dem Flügelbereich zugewandten Bereich des wenigstens einen Vorsprunges aus, und der Hebering nimmt die auf die Manschette wirkenden Gewichtskräfte auf. Der Hebering weist die Anlage an einer dem Flügel zugewandten umlaufenden Kante auf.

An der der Rotorblattöffnung im montierten Zustand zugewandten Seite des Vorsprunges, ist in einer besonders bevorzugten Ausführungsform der Erfindung ein Regenabweiser vorgesehen. Der Regenabweiser umläuft die Rotorblattwurzel, vorzugsweise konzentrisch zum Hebering, ebenfalls vollständig und steht senkrecht zur Längsrichtung so weit von der äußeren Rotorblattwandung ab, dass der Regenabweiser im montierten Zustand des Rotorblattes einen Spalt zwischen einer Verkleidung der Gondel bzw. der Rotornabe und der Außenwandung der Rotorblattwurzel vollständig überdeckt und vor Regeneinfall schützt.

Die Manschette ist Teil der vorbeschriebenen Montage-/Demontageanordnungen und zur Durchführung der eingangs beschriebenen Verfahren geeignet.

Vorzugsweise umfasst die Manschette die Rotorblattwurzel vollständig. Dadurch wird die Kraft über eine große Kontaktfläche entlang des gesamten Umfangs der Rotorblattwurzel auf das Rotorblatt verteilt und die Rotorblattaußenwandung vor Beschädigungen geschützt. Grundsätzlich ist auch denkbar, dass die Manschette im positionierten Zustand das Rotorblatt nur wenigstens zum überwiegenden Teil seines Umfangs quer zur Längsrichtung umfasst. Dadurch kann ein Öffnen und Schließen der Manschette erleichtert werden. Vorzugsweise ist zusätzlich eine Verriegelungseinrichtung an der Manschette vorgesehen, die derart ausgebildet ist, dass die Manschette bei gelöster Verriegelungseinrichtung um das Rotorblatt legbar ist und die Manschette das Rotorblatt bei geschlossener Verriegelungseinrichtung derart umfasst, dass die Manschette nicht vom Rotorblatt trennbar ist. Vorzugsweise weist die Manschette wenigstens zwei sich am Umfang der Manschette gegenüberliegend angeordnete Ösen für Hebeseile auf.

Günstigenfalls ist wenigstens ein Hebemittel an wenigstens einer an der Manschette außen vorgesehenen Befestigungseinrichtung angebracht. Vorzugsweise weist die Manschette einen um die Rotorblattwurzel gespannten Stahlring auf.

In einer bevorzugten Ausführungsform der Erfindung, ist eine dem Vorsprung im montierten Zustand zugewandte Kante der Manschette von der Innenwandung umlaufend hochgebogen und bildet im positionierten Zustand die Rotorblattwurzel umlaufende korrespondierende Auflage aus. Es ist auch denkbar die Kante nur abschnittsweise hochzubiegen und so eine korrespondierende Verzahnung auszubilden. Die Manschette ist aus bekannten Manschetten durch geringe Modifikation und damit kostengünstig herstellbar.

Vorzugsweise sind an der Manschette zwei sich gegenüberliegend angeordnete Befestigungseinrichtungen vorgesehen. Jede der Befestigungseinrichtungen kann einen Zylinder, vorzugsweise Stahlzylinder aufweisen, der mit einer Stirnseite auf der Manschette steht und dort mit ihr verschweißt ist, wobei die Verbindungsstelle zwischen Manschette und Stahlzylinder mit einer sie außen umgebenden Verstärkungsplatte verstärkt ist, die sowohl mit der Außenwandung der Manschette als auch der des Stahlzylinders verschweißt ist.

Von der zylindrischen Außenwandung des Stahlzylinders gehen mit ihr fest verbundene, vorzugsweise spinnenförmig angeordnete Verstärkungsstreben ab. Die Verstärkungen verhindern ein Herausbrechen des Stahlzylinders aus der Verbindungsstelle zur Manschette nach Anbringen des wenigstens einen Hebemittels unter hohen Drehmomentbelastungen.

In eine Öffnung in einer äußeren Stirnseite des Stahlzylinders kann in einer bevorzugten Ausführungsform der Erfindung ein Stahlstift mit einem ein Loch aufweisenden Stahlkopf drehbar eingesteckt sein. Durch das Loch ist vorzugsweise eine Öse für das wenigstens eine Hebemittel gezogen. Die Öse ist somit drehbar mit der Befestigungseinrichtung verbunden, damit der Stellwinkel zwischen dem wenigstens einen Hebemittel und der Längsrichtung während des Montageverfahrens veränderbar ist.

Die Manschette weist vorzugsweise ein Scharnier und auf der dem Scharnier gegenüberliegenden Seite eine einen Innendurchmesser der Manschette verändernde Spanneinrichtung auf. Der Innendurchmesser der Manschette ist dabei so dimensioniert, dass er dem Außendurchmesser der Rotorblattwurzel neben dem wenigstens einem Vorsprung im Wesentlichen entspricht. Durch Anziehen der Spanneinrichtung und damit verbundenem, geringfügigem Verringern des Innendurchmessers der Manschette, wird die reibschlüssige Verbindung zwischen Manschetteninnenwandung und Rotorblattaußenwandung hergestellt.

Die Innenwandung der Manschette als auch die äußere Wandung der korrespondierenden Anlagen sind günstigstenfalls mit einer formelastischen Auflage versehen. Die formelastische Auflage gleicht geringe Unebenheiten der Kontaktflächen aus und verteilt die wirkenden Kräfte vorteilhaft großflächiger.

Grundsätzlich ist es auch denkbar, die aerodynamisch bedingte Verbreiterung des Flügelbereichs entgegen der Längsrichtung des Rotorblattes als Vorsprung zu nutzen und eine der Form des Flügelquerschnitts im Abschnitt neben der größten Flügelbreite angepasste Manschette zur Verfügung zu stellen, die somit nicht über die größte Flügelbreite hinaus rutschen kann.

Das Hebemittel kann ein Hebeseil sein, das durch eine Öse geschoren wird, es ist aber auch denkbar, das Hebemittel einteilig mit der Befestigungseinrichtung auszubilden. Hebeseile können an Befestigungsvorrichtungen der Gondel oder eines Krans oder Ähnlichem befestigt werden.

Günstigenfalls weist die Befestigungseinrichtung einen Stahlzylinder auf, dessen innere Stirnseite mit der Manschette verschweißt ist und an dessen äußerer Stirnseite die Öse vorgesehen ist. Diese Befestigungseinrichtung ist besonders stabil. In den Stahlzylinder kann in dessen äußerer Stirnseite ein Stift eingelassen sein mit einem ein Loch aufweisenden Kopf, durch das die Öse geführt ist. Dadurch ist die Öse gegenüber dem Kopf schwenkbar angeordnet. Der Stift kann im Stahlzylinder drehbar angeordnet sein.

Zur Erhöhung der Stabilität der Manschette sind Versteifungen zwischen der wenigstens einen Befestigungseinrichtung und der Außenwandung der Rotorblattwurzel vorgesehen. Um eine größere Kontaktfläche herzustellen, kann eine formelastische Auflage entlang der Innenwandung der Manschette und außen an der korrespondierenden Anlage vorgesehen sein. Günstigerweise ist die Manschette im Wesentlichen ringförmig ausgebildet und ihr Innendurchmesser entspricht dem Außendurchmesser einer Blattwurzel des Rotorblattes neben dem wenigstens einen Vorsprung.

In einer anderen bevorzugten Ausführungsform ist eine feste einstückige Verbindung der Befestigungsvorrichtung mit dem Hebemittel ausgebildet.

Die Erfindung wird anhand eines Ausführungsbeispiels in drei Figuren beschrieben. Dabei zeigen:
- Fig. 1: eine Seitenansicht einer Rotorblattwurzel eines erfindungsgemäßen Rotorblatts mit Kragen und angelegter Manschette,
- Fig. 2: eine Schnittansicht entlang der Linie II-II in Fig. 1,
- Fig. 3: eine perspektivische Darstellung der Rotorblattwurzel gemäß Fig. 1 mit eingeschorenen Hebeseilen.

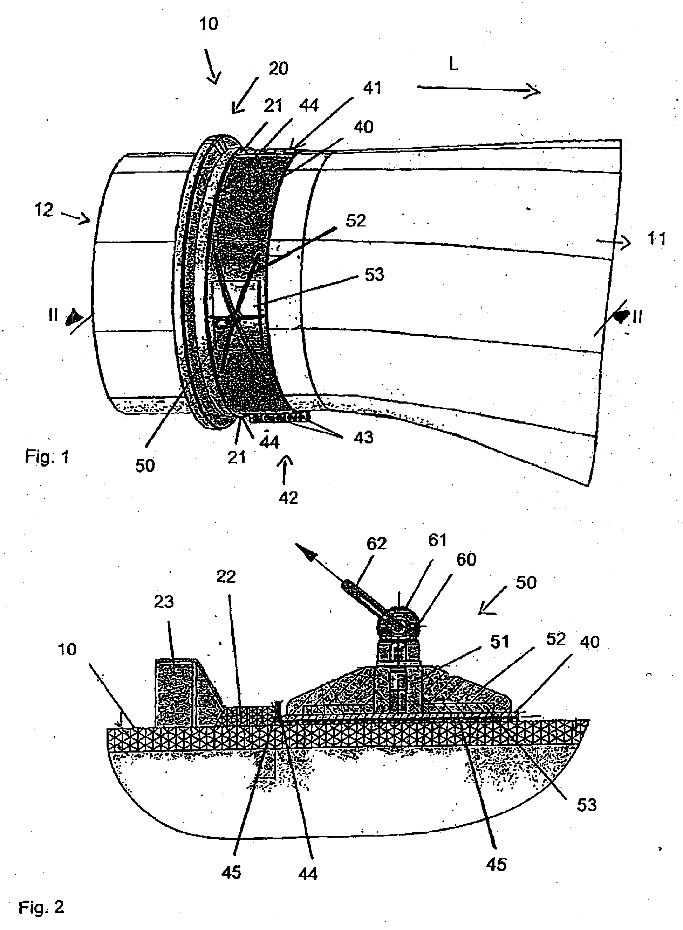

Fig. 1 stellt eine Rotorblattwurzel 10 eines noch nicht montierten Rotorblatts dar. Das Rotorblatt ist zur Montage an einer mit einer Gondel einer Windenergieanlage drehbar verbundenen Rotornabe bestimmt. Das in Fig. 1 linke Ende der Rotorblattwurzel 10, die Rotorblattöffnung 12, ist zur Montage an der Rotornabe vorgesehen. Das in der Fig. 1 rechte Ende der Rotorblattwurzel 10 geht in den sich verbreiternden, eigentlichen Flügelbereich 11 des Rotorblatts über. Eine Längsrichtung L des Rotorblattes erstreckt sich in Fig.1 von der Rotorblattöffnung 12 zum Flügelbereich 11 der Rotorblattwurzel 10.

Die Außenwandung der Rotorblattwurzel 10 ist in einem Querschnitt senkrecht zur Längsrichtung L kreisförmig ausgebildet. Das Rotorblatt und insbesondere auch die Rotorblattwurzel 10 sind im Wesentlichen hohl. Im Innenraum der Rotorblattwurzel können jedoch stabilisierende Stege und andere funktionelle Elemente vorgesehen sein. Die Rotorblattwurzel 10 vollständig umlaufend ist ein Kragen 20 vorgesehen, der mit der Rotorblattwurzel 10 belastungsstabil verbunden ist, d.h. Belastungen entlang einer Längsrichtung L eines Rotorblattes standhält, die durch die Gewichtskraft des Rotorblatts verursacht werden. Der Kragen 20 ist dauerhaft an der Rotorblattwurzel 10 befestigt. Im vorliegenden Ausführungsbeispiel ist der umlaufende Kragen 20 auf seiner Innenseite umlaufend mit der Außenwandung der Rotorblattwurzel verklebt. Ein dem Flügelbereich 11 zugewandter seitlicher Rand des Kragens 20 verläuft in einer Ebene radial zur Längsrichtung L. Er dient als Anlage 30 für eine flügelseitig direkt neben dem Kragen angeordnete berührende Manschette 40.

Die Manschette 40 ist nur während der Montage bzw. Demontage des Rotorblatts und lösbar mit der Rotorblattwurzel 10 verbunden. Die Manschette 40 weist in entlang ihres Umfangs gegenüberliegenden Abschnitten ein Gelenk 41 und eine Spanneinrichtung 42 mit Verschluss auf. Eine Innenwandung der Manschette 40 ist in einem Querschnitt senkrecht zur Längsrichtung L und entlang seiner gesamten Ausdehnung in Längsrichtung L im Wesentlichen kreisförmig ausgebildet. Die Innenwandung der verschlossenen Manschette 40 ist somit ringförmig und der Außenwandung der Rotorblattwurzel 10 in einem die Rotorblattwurzel 10 umlaufenden Abschnitt flügelseitig des Kragens 20 angeformt. Ein Innendurchmesser der geschlossenen Manschette 40 ist nur unwesentlich größer als der Außendurchmesser des umlaufenden Abschnitts der Rotorblattwurzel 10. Die Manschette 40 umfasst zwei gelenkig miteinander verbundene Manschettenhälften. Der Innendurchmesser der Manschette 40 ist verstellbar. Dazu weist die Manschette 40 eine Spanneinrichtung 42 auf, die dem Gelenk 41 an der Manschette 40 gegenüberliegend angeordnet ist. Die Spanneinrichtung 42 umfasst fünf durch jeweils zwei sich gegenüberliegende Löcher in umgebogenen Manschettenhälftenenden geführt Schrauben 43, mit denen der Abstand der Manschettenhälftenenden voneinander einstellbar ist. Durch Anziehen der Schrauben 43 ist der Innendurchmesser der Manschette 40 verringerbar, so dass eine reibschlüssige Verbindung zwischen Manschetteninnenwandung und Rotorblattaußenwandung in dem umlaufenden Abschnitt ausgebildet wird. Dabei werden die Schrauben 43 so angezogen, dass die Manschette 40 beim Anheben nur einen geringeren Teil der Gewichtskraft über die reibschlüssige Verbindung überträgt.

Die Manschette 40 ist unmittelbar neben der Anlage 21 des Kragens 20 angeordnet. Die Manschette 40 weist eine mit der Anlage 21 des Kragens 20 korrespondierende Anlage 44 auf. Die korrespondierende Anlage 44 berührt die Anlage 21 des Kragens 20 entlang des gesamten Umfangs der Manschette 40 bzw. des Kragens 20. Anlage 21 und korrespondierende Anlage bilden eine formschlüssige Verbindung aus, über die ein Teil der Gewichtskräfte transportierbar ist. Außen an der Manschette 40 sind zwei sich entlang der Manschette 40 gegenüberliegend angeordnete Befestigungseinrichtungen für jeweils ein Hebeseil vorgesehen. Die beiden Befestigungseinrichtungen 50 sind gegenüber dem Gelenk 41 und gegenüber der Spanneinrichtung 42 jeweils um 90 ° versetzt.

Jede der Befestigungseinrichtungen 50 weist einen mit seiner inneren Stirnseite mit der Manschette 40 verschweißten Stahlzylinder 51 auf, von dessen Zylinderaußenwandung spinnenförmig sechs Verstärkungsstreben 52 abgehen. Der Stahlzylinder 51 ist an der Verbindungsstelle zur Manschette 40 außen von einer rechteckigen, auf der Rotorblattaußenwandung aufliegenden, die Verbindungsstelle stärkenden Verstärkungsplatte 53 umgeben.

Fig. 2 zeigt den Innenaufbau der Befestigungseinrichtung 50 in einer Schnittansicht entlang der Linie II-II in Fig.1. Auf der äußeren Stirnseite des Stahlzylinders 51 ist ein Stahlstift 60 mit einem ein Loch aufweisenden Kopf 61 eingelassen. Durch das Loch ist eine Öse 62 geführt, die zum Einscheren eines Hebeseils 70 bestimmt ist.

Entlang der Innenwandung der Manschette 40 ist eine die Innenwandung vollständig abdeckende Gummiauflage 45 vorgesehen. Die dem Kragen 20 zugewandte Manschettenkante ist nach außen hochgezogen. Die nach außen hochgezogene Kante ist ebenfalls mit einer Gummiauflage 45 versehen und beides zusammen bildet die korrespondierende Anlage 44 aus.

Der Kragen 20 besteht im Wesentlichen aus einem flügelseitigen Hebering 22 und aus einem parallel zum Hebering 22 flügelabseitig angeordneten Regenabweiser 23. Hebering 22 und Regenabweiser 23 umlaufen die Rotorblattwurzel 10 vollständig und sind rotationssymmetrisch um die Längsachse L. Während des Montagevorganges bzw. Demontagevorganges sind durch die beiden Ösen 62 der sich gegenüberliegenden Befestigungsvorrichtungen 50 Hebeseile geschoren. Die Befestigungsvorrichtungen 50 nehmen die gesamte Gewichtskraft des hängenden Rotorblattes auf. Der Hebering 22 bildet an seiner flügelseitigen Kante die Anlage 21 aus und flügelabseitig schließt sich der Regenabeweiser 23 direkt an den Hebering 22 an.

Die im Montage- bzw. Demontageverfahren über die Hebeseile 70 auf das Rotorblatt ausgeübten Kräfte werden zum einen durch die reibschlüssige Verbindung zwischen Manschetteninnenwandung und Rotorblattaußenwandung auf das Rotorblatt übertragen. Zum anderen werden die Hebe- bzw. Senkkräfte durch den formschlüssigen Kontakt zwischen Anlage 21 des Kragens 20 und korrespondierender Anlage 44 der Manschette 40 über die Manschette 40 und den Hebering 22 auf das Rotorblatt übertragen. Insbesondere der Hebering 22 ist belastungsstabil mit der Rotorblattaußenwandung verklebt. Im weiteren Verlauf des Montageverfahrens hängt das Rotorblatt mit seinem ganzen Gewicht an den an den Ösen 62 befestigten Hebeseilen 70. Die Befestigung zwischen Stahlzylinder 51 und Außenwandung der Rotorblattwurzel 10 muss den wirkenden Drehmomenten standhalten und damit drehmomentstabil sein, und die Summe der formschlüssigen Verbindung zwischen Anlage 21 und korrespondierender Anlage 44 muss die wesentliche Gewichtskraft des Rotorblattes tragen können.

Der Regenabweiser 23 weist einen größeren Außendurchmesser als der Hebering 22 auf. Der Außendurchmesser des Regenabweisers 23 entspricht einer Breite einer Aussparung in der Verkleidung der Rotornabe. Der Regenabweiser 23 des montierten Rotorblatts überdeckt einen Spalt zwischen Rotorblattaußenwandung und der Verkleidung der Rotornabe der Windenergieanlage, und er schützt die Rotornabe vor Regeneinfall.

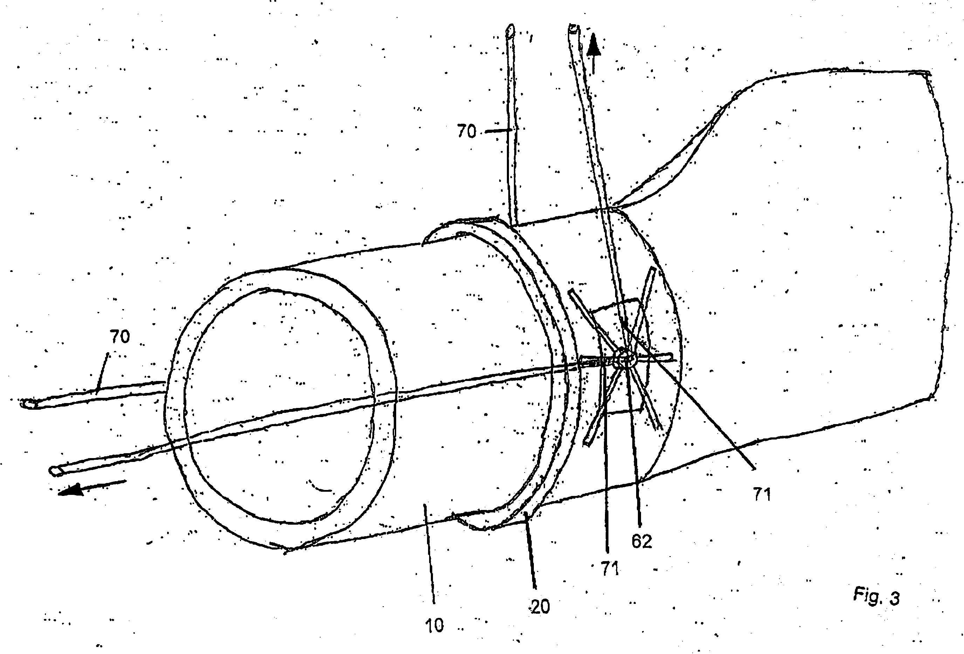

Fig. 3 zeigt eine erfindungsgemäße Montageanordnung in einer weiteren perspektivischen Ansicht. Die Rotorblattwurzel 10 weist den dauerhaft an ihr belastungsstabil montierten Kragen 20 auf.

An jeder der Ösen 62 sind zwei Hebeseilenden 71 festgeknotet. Durch gesteuertes Verkürzen der entsprechenden Hebeseile 70 ist die Rotorblattwurzel 10 positionsgenau zur Anschlussstelle an der Rotornabe bewegbar. Beim Montieren des Rotorblatts wird die Rotorblattspitze auf eine kleinen Wagen gesetzt, um sie vor Beschädigungen durch Nachziehen während des Hebens der Rotorblattwurzel 10 zu schützen.

Ein Hebeseil 70 pro Öse 62 ist zum Anheben des Rotorblatts und das jeweils andere Halteseil 70 ist zur Steuerung des Abstandes der Rotorblattwurzel 10 zum Turm der Windkraftanlage bestimmt.

Bei der Demontage des Rotorblatts, wird die Rotorblattspitze kurz vor Berührung des Bodens auf den kleinen Wagen gesetzt.

Die Kragen 20 und die Manschette 40 sind beabstandet vom Schwerpunkt des Rotorblattes vorgesehen. Die Manschette 40 ist zwischen dem Kragen 20 und dem Schwerpunkt angeordnet.

## Patentansprüche

1. Verfahren zur Montage und/oder Demontage eines Rotorblattes an einer mit einer Gondel einer Windenergieanlage drehbar verbundenen Rotornabe umfassend die Schritte:
Zur-Verfügung-Stellen eines mit wenigstens einem nach außen abstehenden Vorsprung (20) versehenen Rotorblattes,
Positionieren einer Manschette (40) unmittelbar neben dem wenigstens einen Vorsprung (20),
Anbringen und/oder Abnehmen wenigstens eines Hebemittels (70) an/von Befestigungsvorrichtungen (50) der Manschette (40),
Anheben und/oder Absenken des Rotorblattes an die/von der Rotornabe, Wirken mindestens eines Teils der während des Anhebens/Absenkens des Rotorblattes ausgeübten Gewichtskraft auf den wenigstens einen Vorsprung (20),
Aufnehmen der gesamten Gewichtskraft des hängenden Rotorblattes durch die Befestigungsvorrichtungen (50),
Verbinden und/oder Lösen des Rotorblattes mit/von der Rotornabe.

2. Verfahren nach Anspruch 1,
**dadurch gekennzeichnet, dass** der wenigstens eine Vorsprung (20) eine flügelseitige Anlage (21) ausbildet und die Manschette (40) eine rotorblattöffnungsseitige, korrespondierende Anlage (44) aufweist und die beiden Anlagen (21, 44) formschlüssig aneinander positioniert werden.

3. Verfahren nach Anspruch 1, oder 2,
**dadurch gekennzeichnet, dass** das wenigstens eine Hebemittel (70) an wenigstens einer an der Manschette (40) außen vorgesehenen Befestigungseinrichtung (50) angebracht wird.

4. Verfahren nach wenigstens einem der vorstehenden Ansprüche,
**dadurch gekennzeichnet, dass** die Manschette (40) nach der Montage des Rotorblattes entfernt wird.

5. Verfahren nach wenigstens einem der vorstehenden Ansprüche,
**dadurch gekennzeichnet, dass** der mindestens eine Vorsprung (20) vor dem Anbringen der Manschette (40) mit dem Rotorblatt kraft- und /oder formschlüssig verbunden wird.

6. Montage-/Demontageanordnung mit einem Rotorblatt an einer mit einer Gondel einer Windenergieanlage drehbar verbundenen Rotornabe, **dadurch gekennzeichnet, dass** das Rotorblatt wenigstens einen nach außen abstehenden Vorsprung (20) aufweist und
**gekennzeichnet durch** eine abnehmbare Manschette (40), die neben dem wenigstens einen Vorsprung (20) positionierbar ist und
wenigstens ein Hebemittel (70), das an Befestigungsvorrichtungen (50) der Manschette (40) anbringbar ist und das die gesamte Gewichtskraft des hängenden Rotorblattes aufnimmt.

7. Montage-/Demontageanordnung nach Anspruch 6,
**dadurch gekennzeichnet, dass** die Manschette (40) das Rotorblatt entlang seines Umfangs quer zur Längsrichtung (L) wenigstens zum überwiegenden Teil umfasst.

8. Montage-/Demontageanordnung nach Anspruch 6 oder 7,
**dadurch gekennzeichnet, dass** der wenigstens eine Vorsprung als ein eine Blattwurzel (10) umlaufender Kragen (20) ausgeformt ist.

9. Montage-/Demontageanordnung nach Anspruch 6, 7 oder 8,
**dadurch gekennzeichnet, dass** der wenigstens eine Vorsprung (20) im Wesentlichen entlang des Umfangs der Rotorblattwurzel (10) verläuft und das Rotorblatt zumindest teilweise umfasst.

10. Montage-/Demontageanordnung nach wenigstens einem der Ansprüche 6 bis 9,
**dadurch gekennzeichnet, dass** der wenigstens eine Vorsprung (20) eine flügelseitige Anlage (21) aufweist und die Manschette (40) eine rotorblattöffnungsseitige korrespondierende Anlage (44) aufweist und die während der Montage und/oder Demontage auftretenden Gewichtskräfte überwiegend durch den Formschluss zwischen Anlage (21) und korrespondierender Anlage (44) übertragbar sind.

11. Montage-/Demontageanordnung nach wenigstens einem der Ansprüche 6 bis 10,
**dadurch gekennzeichnet, dass** eine Innenwandung der Manschette (40) und eine Außenwandung der Rotorblattwurzel (10) eine reibschlüssige Verbindung ausbilden, und die während der Montage auftretenden Gewichtskräfte überwiegend durch eine reibschlüssige Verbindung übertragbar sind.

12. Montage-/Demontageanordnung nach wenigstens einem der Ansprüche 6 bis 11, **dadurch gekennzeichnet, dass** der wenigstens eine Vorsprung (20) einen Hebering (22) zur Aufnahme der Gewichtskräfte und einen Regenabweiser (23) aufweist, der im montierten Zustand des Rotorblattes einen Spalt zwischen der Rotorblattwurzel (10) und einer Verkleidung der Rotornabe zumindest teilweise abdeckt.

## Claims

1. A method of assembling and/or dismantling a rotor blade on a rotor hub connected in a rotatable manner to a nacelle of a wind energy plant, comprising the steps:
making available a rotor blade provided with at least one projection (20) protruding outwards,
positioning a sleeve (40) immediately next to the at least one projection (20),
attaching and/or removing at least one lifting means (70) to/from fastening apparatus (50) of the sleeve (40),
raising and/or lowering the rotor blade to/from the rotor hub,
exerting at least part of the weight force exercised during the raising / lowering of the rotor blade upon the at least one projection (20),
absorbing the entire weight force of the suspended rotor blade by the fastening apparatus (50),
connecting and/or detaching the rotor blade to/from the rotor hub.

2. A method according to Claim 1, **characterized in that** the at least one projection (20) forms an abutment (21) towards the vane and the sleeve (40) has a corresponding abutment (44) towards the rotor blade opening and the two abutments (21, 44) are positioned against each other in a positively locking manner.

3. A method according to Claim 1 or 2, **characterized in that** the at least one lifting means (70) is attached to at least one fastening device (50) provided on the outside of the sleeve (40).

4. A method according to at least one of the preceding Claims, **characterized in that** the sleeve (40) is removed after the assembly of the rotor blade.

5. A method according to at least one of the preceding Claims, **characterized in that** the at least one projection (20) is connected to the rotor blade in a non-positively and/or positively locking manner before the attachment of the sleeve (40).

6. An assembly / dismantling device with a rotor blade on a rotor hub connected in a rotatable manner to a nacelle of a wind energy plant, **characterized in that** the rotor blade has at least one projection (20) protruding outwards, and
**characterized by** a removable sleeve (40) which is capable of being positioned next to the at least one projection (20), and
at least one lifting means (70) which is capable of being attached to fastening apparatus (50) of the sleeve (40) and which absorbs the entire weight force of the suspended rotor blade.

7. An assembly / dismantling device according to Claim 6, **characterized in that** the sleeve (40) embraces the rotor blade along the periphery thereof transversely to the longitudinal direction (L) at least for the greater part.

8. An assembly / dismantling device according to Claim 6 or 7, **characterized in that** the at least one projection is shaped in the form of a collar (20) extending around a blade root (10).

9. An assembly / dismantling device according to Claim 6, 7 or 8, **characterized in that** the at least one projection (20) extends substantially along the periphery of the rotor blade root (10) and embraces the rotor blade at least in part.

10. An assembly / dismantling device according to at least one of Claims 6 to 9, **characterized in that** the at least one projection (20) has an abutment (21) towards the vane and the sleeve (40) has a corresponding abutment (44) towards the rotor blade opening and the weight forces occurring during the assembly and/or dismantling are capable of being transmitted for the greater part by the positive locking between the abutment (21) and the corresponding abutment (44).

11. An assembly / dismantling device according to at least one of Claims 6 to 10, **characterized in that** an inner wall of the sleeve (40) and an outer wall of the rotor blade root (10) form a connection with friction locking, and the weight forces occurring during the assembly are capable of being transmitted for the greater part by a connection with friction locking.

12. An assembly / dismantling device according to at least one of Claims 6 to 11, **characterized in that** the at least one projection (20) has a lifting ring (22) for absorbing the weight forces and a rain shield (23) which in the assembled state of the rotor blade covers a gap between the rotor blade root (10) and a covering of the rotor hub at least in part.

## Revendications

1. Procédé pour le montage et/ou démontage d'une pale de rotor sur un moyeu de rotor relié en étant rotatif à une nacelle d'une éolienne comprenant les étapes de:
mise à disposition d'une pale de rotor avec au moins une saillie (20) faisant projection vers l'extérieur,
positionnement d'une manchette (40) directement à côté de la saillie qui existe au moins (20),
fixation d'au moins un moyen de levage (70) sur des moyens de fixation (50) de la manchette (40) et/ou enlèvement des moyens de fixation,
soulèvement et/ou abaissement de la pale de rotor sur le/du moyeu de rotor,
action d'au moins une partie de la force de poids exercée pendant le soulèvement/l'abaissement de la pale du rotor sur la saillie qui existe au moins (20),
absorption de toute la force de poids de la pale de rotor en suspension par les dispositifs de fixation (50),
liaison et/ou détachement de la pale de rotor au/du moyeu de rotor.

2. Procédé selon la revendication 1,
**caractérisé en ce que** la saillie qui existe au moins (20) forme un appui du côté de la pale et la manchette (40) présente un appui correspondant (44) du côté de l'ouverture de la pale de rotor et les deux appuis (21, 44) sont positionnés l'un contre l'autre par complémentarité de forme.

3. Procédé selon la revendication 1 ou 2,
**caractérisé en ce que** le moyen de levage qui existe au moins (70) est fixé sur au moins un dispositif de fixation (50) prévu à l'extérieur sur la manchette (40).

4. Procédé selon au moins l'une des revendications précédentes,
**caractérisé en ce que** la manchette (40) est enlevée après le montage de la pale de rotor.

5. Procédé selon au moins l'une des revendications précédentes,
**caractérisé en ce que** la saillie qui existe au moins (20) est reliée à la pale de rotor par la force et/ou par complémentarité de forme avant la fixation de la manchette (40).

6. Dispositif de montage/démontage avec une pale de rotor sur un moyeu de rotor relié en étant rotatif à une nacelle d'une éolienne,
**caractérisé en ce que** la pale de rotor présente au moins une saillie (20) qui fait projection vers l'extérieur et **caractérisé par** une manchette amovible (40) qui peut être positionnée à côté de la saillie qui existe au moins (20) et par au moins un moyen de levage (70) qui peut être fixé sur des dispositifs de fixation (50) de la manchette (40) et qui absorbe toute la force de poids de la pale de rotor en suspension.

7. Dispositif de montage/démontage selon la revendication 6,
**caractérisé en ce que** la manchette (40) comprend au moins pour la plus grande partie la pale de rotor le long de sa périphérie transversalement par rapport au sens longitudinal (L).

8. Dispositif de montage/démontage selon la revendication 6 ou 7,
**caractérisé en ce que** la saillie qui existe au moins (20) est formée comme une collerette (20) qui entoure une racine de pale de rotor (10).

9. Dispositif de montage/démontage selon la revendication 6, 7 ou 8,
**caractérisé en ce que** la saillie qui existe au moins (20) est substantiellement le long de la périphérie de la racine de pale de rotor (10) et enserre au moins partiellement la pale de rotor.

10. Dispositif de montage/démontage selon au moins l'une des revendications 6 à 9, **caractérisé en ce que** la saillie qui existe au moins (20) présente un appui (21) du côté de la pale et la manchette (40) présente un appui correspondant (44) du côté de l'ouverture de la pale de rotor et les forces de poids qui interviennent pendant le montage et/ou le démontage peuvent être transmises principalement par la fermeture par complémentarité entre l'appui (21) et l'appui correspondant (44).

11. Dispositif de montage/démontage selon au moins l'une des revendications 6 à 10, **caractérisé en ce qu'**une paroi intérieure de la manchette (40) et une paroi extérieure de la racine de la pale de rotor (10) forment une liaison par friction et les forces de poids qui interviennent pendant le montage peuvent être transmises principalement par une liaison par friction.

12. Dispositif de montage/démontage selon au moins l'une des revendications 6 à 11, **caractérisé en ce que** la saillie qui existe au moins (20) présente un anneau de levage (22) pour recevoir les forces de poids et un pare-pluie (23) qui, lorsque la pale de rotor est à l'état monté, recouvre au moins partiellement une fente entre la racine de la pale de rotor (10) et un habillage du moyeu du rotor.
